# EUROPEAN PATENT SPECIFICATION

(11) **EP 3 231 143 B1**
(45) Date of publication and mention of the grant of the patent: **11.08.2021**
(21) Application number: 15867613.0
(22) Date of filing: 10.11.2015
(51) Int. Cl.: H04L 12/951, H04L 12/801, G06F 12/04, G06F 12/06, G06F 13/16, G06F 13/28, G06F 9/38, H04L 29/06, H04L 12/805

(54) **A METHOD, APPARATUS AND SYSTEM FOR ENCODING COMMAND INFORMATION IN A PACKET-BASED NETWORK**
VERFAHREN, VORRICHTUNG UND SYSTEM ZUR CODIERUNG VON BEFEHLSINFORMATIONEN IN EINEM PAKETBASIERTEN NETZWERK
PROCÉDÉ, APPAREIL, ET SYSTÈME D'ENCODAGE D'INFORMATIONS DE COMMANDE DANS UN RÉSEAU EN MODE PAQUETS

(30) Priority: 12.12.2014 US 201414568314
(43) Date of publication of application: 18.10.2017
(73) Proprietor: Intel Corporation, Santa Clara, CA 95054 (US)
(72) Inventor: REINIG, Helmut, 84424 Isen (DE)
(74) Representative: Samson & Partner Patentanwälte mbB
(86) International application number: PCT/US2015/059875
(87) International publication number: WO 2016/094006

(56) References cited:
- WO-A2-2005/106686
- US-A1- 2011 085 550
- US-A1- 2013 051 385
- US-A1- 2014 112 339
- US-B1- 6 393 500
- US-B2- 7 171 496
- None

## Description

### Field of the Invention

This disclosure pertains to computing systems, and in particular (but not exclusively) to on-die interconnection of devices.
Document US 2013/0051385 A1 relates to a method for generating headers in packetized protocols for a flexible routing network for a Nework on Chip (NoC) architecture that includes generating packets based on transmission traffic received form an initiator or target connected to a routing network that connects disparate initiators and targets. Logic to generate the packets is in an interface located between initiator or the target and the routing network. A header portion of a packet is variable in length and includes a header payload and header control information. Each of the header portion and the body portion includes one or more standard sized transmission units. The size of the transmission units and width of the header payload are determined by logic included in the interface. The width of the header payload is determined based on orthogonal groups with each of the orthogonal groups being associated with targets sharing an initiator thread.
Document US 2014/0112339 A1 relates to software development involving coordination of mutually-dependent constrained systems. A physical layer (PHY) is coupled to a serial, differential link that is to include a number of lanes. The PHY includes a transmitter and a receiver to be coupled to each lane of the number of lanes. The transmitter coupled to each lane is configured to embed a clock with data to be transmitted over the lane, and the PHY periodically issues a blocking link state (BLS) request to cause an agent to enter a BLS to hold off link layer flit transmission for a duration. The PHY utilizes the serial, differential link during the duration for a PHY associated task selected from the group including an in-band reset, an entry into low power state, and an entry into partial width state.

### Summary

The invention is defined as an apparatus according to claim 1, a method according to claim 4, and a computer software product according to claim 7. The dependent claims define various embodiments.

### Brief Description of the Drawings

FIG. 1 is a block diagram of at least a portion of a network on chip (NoC) in accordance with an embodiment of the present invention.
FIG. 2 is a block diagram of further details of a router in accordance with an embodiment of the present invention.
FIG. 3 is a block diagram of a downconversion logic in accordance with an embodiment of the present invention.
FIG. 4 is a block diagram of an upconversion logic in accordance with an embodiment of the present invention.
FIG. 5 is a flow diagram of a method for encoding a packet in accordance with an embodiment of the present invention.
FIG. 6 is a flow diagram of a method for processing a command portion of a packet at a destination location in accordance with an embodiment of the present invention.
FIG. 7 is a flow diagram of a method for performing a downconversion link width operation in accordance with an embodiment of the present invention.
FIG. 8 is a flow diagram of a method for performing an upconversion link width operation in accordance with an embodiment of the present invention.
FIG. 9 is a block diagram of a portion of a system on chip (SoC) in accordance with an embodiment of the present invention.
FIG. 10 is a block diagram of an SoC in accordance with an embodiment of the present invention.
FIG. 11 is a block diagram of a representative modem in accordance with an embodiment.
FIG. 12 is a block diagram of a system in accordance with an embodiment of the present invention.
FIG. 13 is a block diagram of an example system with which embodiments can be used.
FIG. 14 is a block diagram of another example system with which embodiments may be used.
FIG. 15 is a block diagram of a system on a chip in accordance with an embodiment.

### Detailed Description

In various embodiments, a burst command encoding for a packet-based communication is used that is independent of data (e.g., word) width, and thus a packet may be sent throughout a system such as a network on chip (NoC) having links of different link widths without the need for any change to the command encoding, whenever upsizing and downsizing of link widths is incurred in the network on chip. As a consequence, a packet traversing a network on chip from source to destination can be upsized and downsized with regard to link widths by merging or dissecting packet units (e.g., flow control units or flits). Embodiments enable such width changes without any re-encoding and without additional storage or latency to adapt to the changed link width, although inherent storage and latency may occur when multiple smaller flits are to be collected to form a wider flit.

According to embodiments, a burst command encoding includes at a minimum two orthogonal pieces of information, both independent of the link width. The first information is the size of the burst. This burst size remains in a static or fixed quantity (bits, bytes, nibbles, etc.), independent of the actual size of a word, flit, or particular link width for a segment of the network communication. The second information is a wrapping border information. In an example specific implementation, an address sequence stops incrementing at the end border and jumps back to the start border, again using a fixed quantity (address bits, byte address, ...) independent of flit width to express the borders. In this way, reduced complexity of upsizing and downsizing functions for link width changes within a network on chip (or other interconnect solutions) is realized, because command re-coding is not needed inside the network on any width change. Still further, a reduced area of a design for a packet-based NoC, e.g., that uses wormhole routing, may be realized because there is no need to collect several first flits of a packet in a storage inside the upsize or downsize function to be able to change packet contents. Also, reduced latency for packet-based NoCs may be realized because no time is spent on packet inspection and modification of command encoding during any upsize or downsize functions. Note that in some embodiments, the smaller the link widths, the more prominent the savings are, because at small link widths, the number of flits to store and inspect to obtain access to the command encoding is higher than for wide link widths, where all of that information may be present in a first flit.

In embodiments described herein, the encoding of a burst is independent of the current word width. Different approaches may be used to realize such encoding. Although the scope of the present invention is not limited in this regard, example encodings include: basing a burst description on the smallest data transfer quantity used in a system (e.g., bit, byte, half-word, or word); basing a burst description on the native word width of an initiator agent (and transmitting the original word width as part of the burst description); basing a burst description on a native word width of a target or destination component and potentially performing an encoding conversion at the initiator agent; or basing a burst description on a configurable quantity and transmitting that quantity information along with the message.

In all these cases, any size conversion operation for a link width change on the path from initiator to target can avoid inspecting the packet and modifying the burst encoding. Instead such a size conversion operation takes the form of a rearrangement of the flits (e.g., in parallel or serially at every resizing component). All encoding/decoding conversions are to be done on initiator or on target side or both only.

Generally, a burst can be described in an industry standard bus or other bus by a start address, the amount of data (also referred to as beat size) transferred in a single clock cycle (one beat), the number of beats, and an address sequence mechanism. In different cases, an address sequence mechanism may be incrementing, in which every beat is incrementally adjacent to its predecessor in memory space; fixed, in which every beat is sent to the same address (the start address); or wrapping, in which when an address that is a multiple of the beat size times the beat number has been reached, the burst continues at the next lower integer multiple of the beat size times the beat number. Thus typical bus burst descriptions are based on the beat size, which is a function of the word width of the links.

A command portion of a packet can be encoded to be independent of link width in different manners as mentioned above. In Table 1, an implementation example is shown in which a smallest data transfer granularity for the system is assumed to be a byte. As shown in Table 1, a burst description includes a start address as a byte address; a total length in bytes (calculated from beat size times number of beats); a wrap border specified as a power-of-two multiple of bytes; and a means to distinguish different burst types (e.g., wrapping, fixed and incrementing bursts). For a fixed address burst, the wrap border can be set to the beat size of the initiator, such that a fixed burst is a special case of a wrapping burst that spans a constrained address space multiple times. For an incrementing burst, the wrap border may be set to a special size that does not make sense for fixed or wrapping bursts (e.g., the maximum encodable wrap border value, which may be bigger than the maximum encodable burst length). Otherwise an encoding for a command portion of a header may include a fourth parameter value to distinguish among incrementing, wrapping, and fixed bursts.

**Table 1**

| | | | | | | | |
|---|---|---|---|---|---|---|---|
| Approach a): Encoding Based on Byte Granularity | | | | | | | |
| Rules: all values marked with * in Bytes | | | | | | | |

| Wrap-border | | Type | | Length* | | | Address* |
|---|---|---|---|---|---|---|---|
| 32->64 bit: | | | | | | | |
| Upsize Input | | | | | | | |
| - | INC | | 32 | | | | |
| 0xABCDEF04 | | | | | | | |
| Upsize Output | | | | | | | |
| - | INC | | 32 | | 0xABCDEF04 | | |
| 64->32 bit: | | | | | | | |
| Downsize Input | | | | | | | |
| 2^6 | WP | 64 | 0xABCDEF08 | | | | |
| Downsize Output | | | | | | | |
| 2^6 | WP | 64 | | | | | |
| 0xABCDEF08 | | | | | | | |

In the approach of Table 1, the density of the encoding can be improved where the wrap border is not directly given as an integer number counting the byte address when to wrap around, but as an integer exponent only representing boundaries that are restricted to power-of-two values. Note that such restriction is reasonable as most components in modern SoCs have bus interfaces of a width of a power of two and limit wrapping burst lengths to powers of two.

In Table 2, an implementation example is shown for a burst description based on initiator data width. As shown in Table 2, this encoding includes a start address in a known quantity (not necessarily bytes); a beat size of the initiator (Init-size); a number of beats; and an indicator of burst kind (e.g., incrementing, wrapping, or fixed).

**Table 2**

| | | | | |
|---|---|---|---|---|
| Approach b): Encoding Based on Initiator Data Width | | | | |
| Rules: size may be larger than current data width | | | | |

| Init-size | Type | Length | Address | |
|---|---|---|---|---|
| 32->64 bit: | | | | |
| Upsize Input | | | | |
| 32 | INC | 8 | | |
| 0xABCDEF04 | | | | |
| Upsize Output | | | | |
| 32 | INC | 8 | 0xABCDEF04 | |
| 64->32 bit: | | | | |
| Downsize Input | | | | |
| 64 | WP | 8 | 0xABCDEF08 | |
| Downsize Output | | | | |
| 64 | WP | 8 | | |
| 0xABCDEF08 | | | | |

An encoding as in Table 2 closely resembles common bus protocol encoding. As such, transaction encoding on an initiator side may be comparably simple. In this case, a target agent may be configured to be capable of converting different incoming encodings to the target bus width, which may increase complexity of decoding logic of a target network interface.

In Table 3, an implementation example is shown in which a burst encoding is based on a target data width. As shown in Table 3, a burst description includes a start address in a known quantity (not necessarily bytes); a beat size of a target (which may be omitted (this is shown in italics in Table 3) in transmission, because the target knows implicitly this size and all other components on the path do not need such information, except the unit computing the burst encoding); a number of beats; and an indicator of burst kind (e.g., incrementing, wrapping, or fixed).

Note the beat size may be larger than current data width and the address need not be properly aligned: it will be fixed at the target network interface; and target data width transmission in message is optional, since it is to be used in the target only for translation (and potential transaction splitting for alignment) to bus protocol.

**Table 3**

| | | | | | |
|---|---|---|---|---|---|
| Approach c): Encoding Based on Target Data Width | | | | | |
| Rules: size may be larger than current data width; address need not be properly aligned: it will be fixed at target network interface; target data width transmission in message is optional, since needed in target only for translation (and potential transaction splitting for alignment) to bus protocol. | | | | | |

| *Target-size* | Type | Len gth | | Address | |
|---|---|---|---|---|---|
| 32->64 bit: | | | | | |
| Upsize Input | | | | | |
| *128* | INC | 2 | | | |
| 0xABCDEF04 | | | | | |
| Upsize Output | | | | | |
| *128* | INC | 2 | 0xABCDEF04 | | |
| 64->32 bit: | | | | | |
| Downsize Input | | | | | |
| *128* | WP | 4 | 0xABCDEF08 | | |
| Downsize Output | | | | | |
| *128* | WP | 4 | | | |
| 0xABCDEF08 | | | | | |

An encoding as in Table 3 enables the possibility to remove encoding of a target bus size from the packet format and thus from the bandwidth requirements for message transmission through the network. However, initiator network interfaces may be configured to comprehend target interface bus width and have proper encoding logic for all these cases, which may add complexity to initiator interfaces. Note that with such encoding, a target interface may be configured to segment or split misaligned bursts originating from initiators with reduced data width. These may be split into a sequence of smaller bursts on the target side finally.

In Table 4, an implementation example is shown for a burst description based on a configured data width. As shown in Table 4, this encoding includes a start address in a known quantity (not necessarily bytes); a beat size of a selected granularity; a number of beats; and an indicator of burst kind (e.g., incrementing, wrapping, or fixed).

**Table 4**

| | | | | | |
|---|---|---|---|---|---|
| Approach d): Encoding Based on Configured Data Width | | | | | |
| Rules: cfg-size may be larger than current data width; all values marked with * in cfg-size Quantities | | | | | |

| cfg-size | type | Lengt h* | | Address | |
|---|---|---|---|---|---|
| 32->64 bit: | | | | | |
| Upsize Input | | | | | |
| 16 | INC | 16 | | | |
| 0xABC DEF04 | | | | | |
| Upsize Output | | | | | |
| 16 | INC | 16 | 0xABCDEF04 | | |
| 64->32 bit: | | | | | |
| Downsize Input | | | | | |
| 16 | WP | 32 | 0xABCDEF08 | | |
| Downsize Output | | | | | |
| 16 | WP | 32 | | | |
| 0xABCDEF08 | | | | | |

An encoding as in Table 4 having a configurable data width is very close to the approach of Table 1 for those cases where the configured data width is the same throughout all the network, except that the granularity is not bytes but another unit, which can improve encoding density. If on the other hand, every initiator agent uses a private configurable data width, the effect on the target protocol translators may be about the same as in the approach of Table 2 in which all combinations that exist may be supported in translation.

To achieve the objective to prevent packet inspection and modification for upsizing and downsizing components, packet format encoding may further have a payload size encoding that is independent of flit width, and a packet end detection that is independent of flit width.

Payload size encoding is achieved by adding a utilized-payload parameter to a message, whose size is the size of the burst (e.g., the Length parameter in the examples above that specifies the amount of transmitted data as a multiple of the fixed quantity size). The utilized-payload parameter gives the size of the actual payload data only, not including header, command or padding. Header and command length are known from the packet format and are either a fixed or a packet-format dependent quantity. Then even potentially required padding of the payload to fill a wide flit in upsizing would not matter, because the utilized-payload parameter indicates which payload bytes are padding bytes that can be ignored. An end of message encoding may be achieved by inclusion of end of packet indicators, which may be implemented using one or more marker bits that accompany every flit to distinguish the last flit of a message from the others, or by encoding packet flits in a manner such that a specifically encoded tail flit can complete a message uniquely.

Tables 5 and 6 below describe further example burst descriptions.

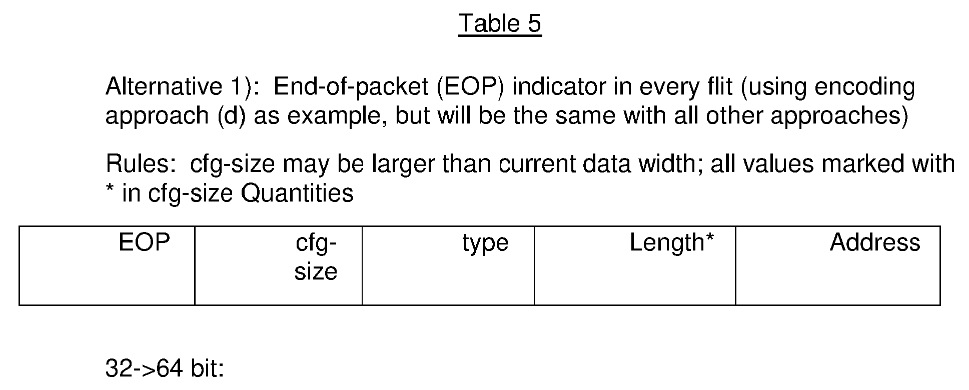

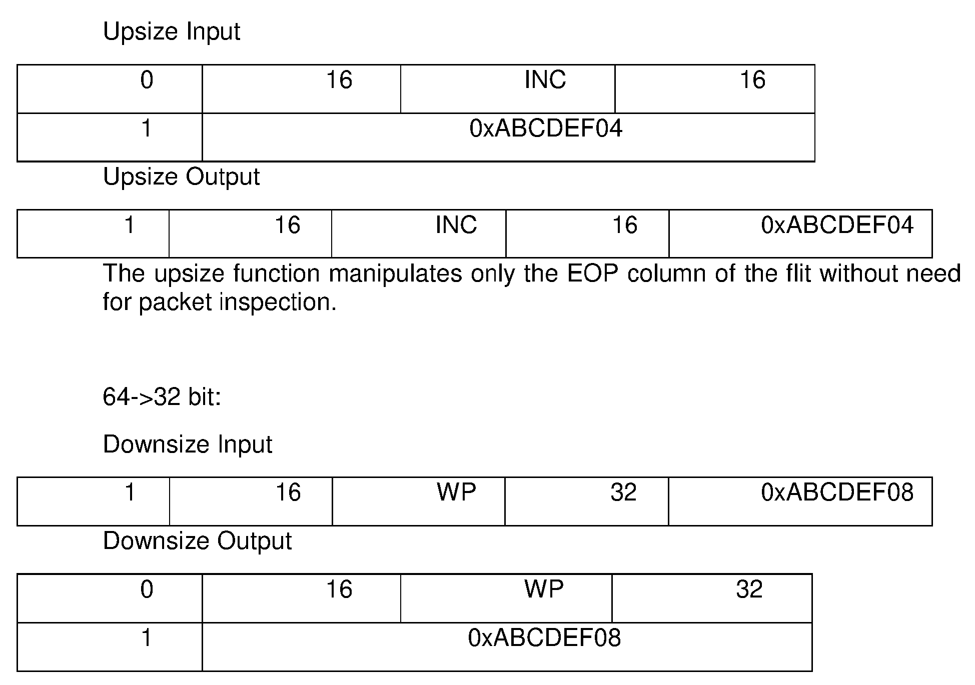

In this example, a downsize function manipulates only the EOP column of the flit without need for packet inspection.

In packet formats that use specifically encoded tail flits after a message (often carrying additional information like a checksum), instead of an EOP column the existing flit-type designator can be manipulated in the up- and downsize functions.

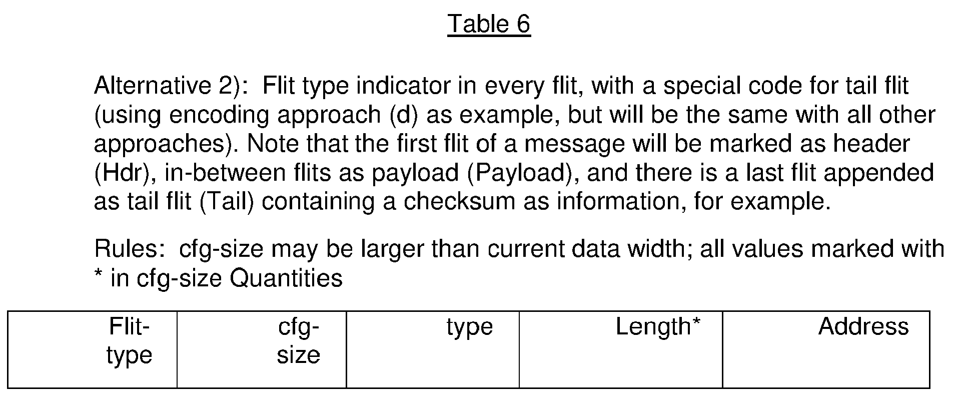

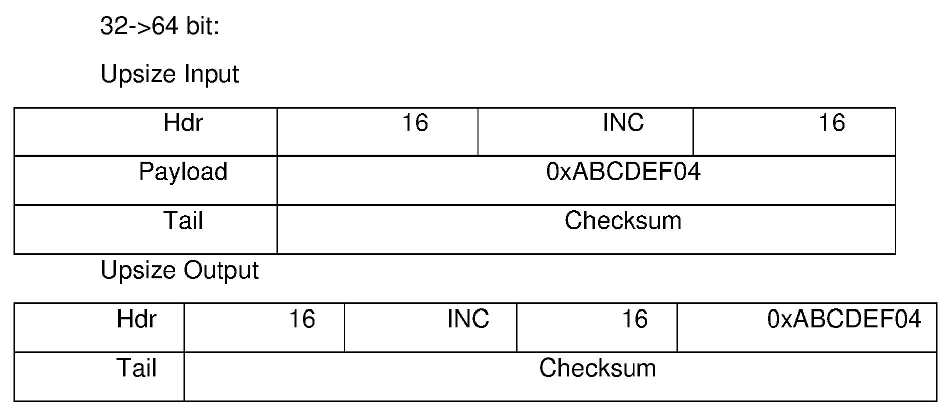

In this example, the upsize function manipulates only the Flit-type column of the flit without need for packet inspection. If there is a checksum in the tail flit, it may be recomputed, depending on checksum algorithm.

| | | | | | | |
|---|---|---|---|---|---|---|
| 64->32 bit: | | | | | | |
| Downsize Input | | | | | | |
| Hdr | 16 | | WP | | 32 | 0xABCDEF08 |
| Tail | Checksum | | | | | |
| Downsize Output | | | | | | |
| Hdr | | 16 | | WP | | 32 |
| Payload | | 0xABCDEF08 | | | | |
| Tail | | Checksum | | | | |

In this example, the downsize function manipulates only the Flit-type column of the flit without need for packet inspection. If there is a checksum in the tail flit, it may be recomputed, depending on checksum algorithm.

Although specific encodings and ordering of encoding information are shown in Tables 1-6, understand that a command encoding in accordance with an embodiment of the present invention can take many different forms.

Note that in all implementation alternatives described above, the current data width of the link is not part of the burst encoding. As such, burst encoding remains unchanged over upsizing and downsizing components and no packet inspection occurs for any upsizing or downsizing operation.

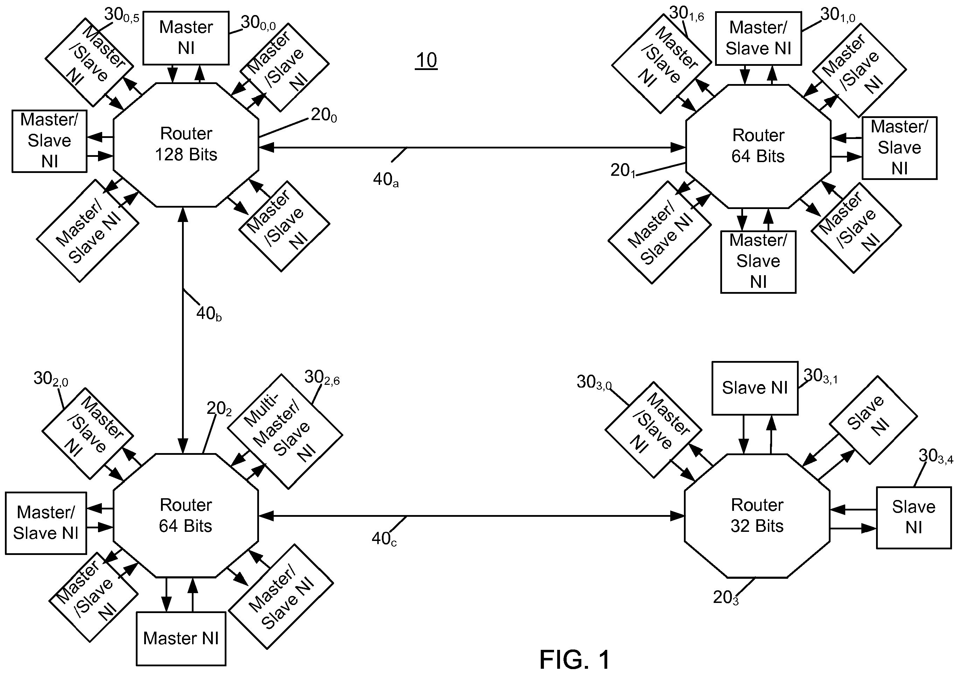

Referring now to FIG. 1, shown is a block diagram of at least a portion of an NoC in accordance with an embodiment of the present invention. As shown in FIG. 1, SoC 10 includes a plurality of routers 20₀ - 20₃. As seen, pairs of routers are coupled together via corresponding interconnects 40, each of which may correspond to a point-to-point interconnect (namely interconnect 40a-40c).

In the context of FIG. 1, note that different ones of routers 20 are configured to operate at different link widths. For example, router 20₀ is configured to operate at a 128 bit width, routers 20₁ and 20₂ are configured to operate at a 64-bit width, and router 20₃ is configured to operate at a 32-bit width. As such, it is possible for each of interconnects 40 to have a link width that differs from one or more of the coupled routers. Accordingly, each router may include or be associated with conversion logic such as upconversion and/or downconversion logic to enable communication via the corresponding interconnect at the appropriate link width, regardless of a native bit width at which the router is configured to operate.

Still referring to FIG. 1, each router 20 is coupled to a plurality of network interfaces (NIs) 30. Due to the configuration of a NoC, it is possible for different numbers of NIs to be coupled to each router. Furthermore, as shown in FIG. 1, the NIs may take different forms, including dedicated master NIs, such as NI 30_{0,0} dedicated slave NIs, such as NI 30_{3,1} and multi-function NIs (e.g., master/slave NIs), such as 30_{0,5}. Note that each of these network interfaces 30 may couple to one or more intellectual property (IP) logics of an SoC or other device including the NoC. For ease of illustration however, the IP logics or other endpoints to which the network interfaces couple are not shown. Furthermore, understand that for discussion purposes herein each of these NIs is shown independently, it is possible for the NIs to be included in particular endpoints or other IP logic, in some implementations.

Due to the NoC arrangement in which different links may operate at different link widths, appropriate conversion circuitry such as upconversion and/or downconversion logic may be included within and/or associated with individual routers 20 and/or NIs 30 as appropriate for a particular configuration.

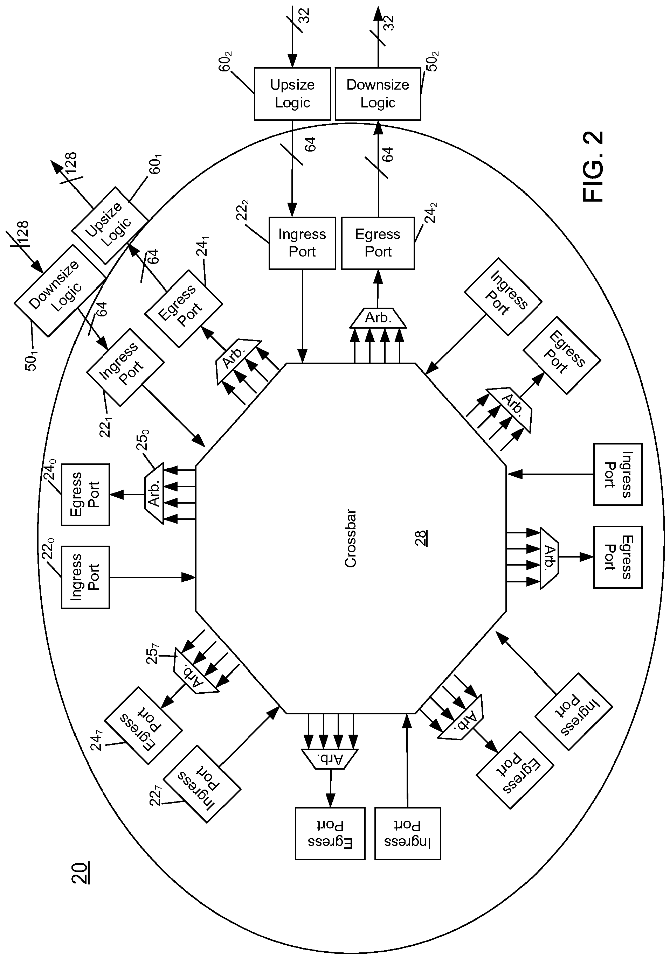

Referring now to FIG. 2, shown is a block diagram of further details of a router in accordance with an embodiment of the present invention. As shown in FIG. 2, router 20 is configured as an 8-port router. In some cases, each individual port (formed of an ingress port 22 and an egress port 24) couples to a corresponding network interface (not shown for ease of illustration in FIG. 2), a given interconnect or, in a particular configuration may be unconnected.

With further reference to router 20, a plurality of ingress ports 22₀- 22₇ are provided, each configured to receive incoming information from a source location and provide the information to a destination location via a crossbar 28 which, in an embodiment may be a sparsely populated crossbar to enable appropriate connections between the different ports of the router. A plurality of egress ports 24₀-24₇ are also provided, each configured to receive information from a corresponding arbiter 25₀-25₇ and output such information to a destination location. Note that each arbiter 25 may receive multiple information streams and select an appropriate stream for output from the corresponding egress port. Note that each pair of ingress port 22 and egress port 24 may be associated with a particular network interface, interconnect or other agent (or remain unconnected).

In certain cases, link width changes may occur due to changes in native bit width at which different agents operate. Accordingly as shown in FIG. 2, a corresponding downsize logic 50 (also referred to herein as downconversion logic) and upsize logic 60 (also referred to herein as upconversion logic) may be associated with the corresponding ingress ports 22 and egress ports 24. In the specific embodiment shown in FIG. 2, a first downsize logic 50₁ is coupled to ingress port 22₁ and corresponding first upsize logic 60₁ is coupled to egress port 24₁. In the particular embodiment shown, incoming information to downsize logic 50₁ is received at a 128-bit width and is downconverted to 64 bits. The incoming information provided to upsize logic 60₁ is received at a 64-bit width and is upconverted to be output at a 128-bit width. Similarly, a second downsize logic 50₂ is coupled to ingress port 22₂ and corresponding second upsize logic 60₂ is coupled to egress port 24₂. In the particular embodiment shown, incoming information to downsize logic 50₂ is received at a 64-bit width and is downconverted to 32 bits. The incoming information provided to upsize logic 60₂ is received at a 32-bit width and is upconverted to be output at a 64-bit width. Understand while shown at this high level in the embodiment of FIG. 2, many variations and alternatives are possible.

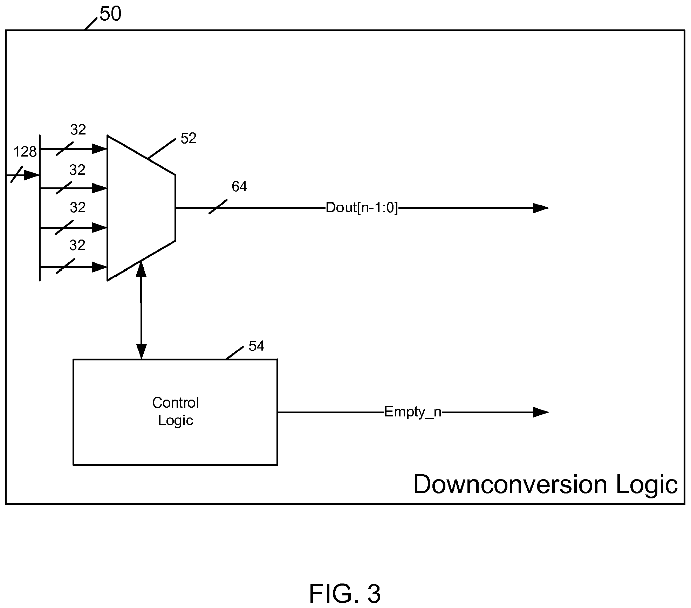

Referring now to FIG. 3, shown is a block diagram of a downconversion logic 50 in accordance with an embodiment of the present invention. As shown in FIG. 3, downconversion logic 50 includes a selection logic 52, which in an embodiment may be a multiplexer or other logic. As seen, incoming information is received at a first bit width (e.g., 128 bits) and is output from selection logic at a second bit width (e.g., 64 bits). While described with this particular example, various bit widths inputs and outputs are possible. As seen, selection logic 52 is under control of a control logic 54, which selects appropriate one or more portions of the incoming information to output as a flow control unit (dout[n-1:0]). As further seen, control logic 54 also outputs a not empty indication signal (empty_n) to indicate that a resized word is available for consumption/propagation. In downconversion logic 50, each incoming word creates multiple cycles of empty_n being high, before all fragments of that word have been consumed and either another is already available in the pipeline or empty_n goes low.

Each instantiation of downconversion logic 50 within an NoC may have a configurable input bit width and output bit width, as appropriate for interconnection between different logics, agents and or interconnects operating at different native bit widths. Note that control logic 54 need not inspect the incoming information or any portion of it (such as a header portion or command portion) to determine a type of packet or to perform any type of re-coding of any information therein. Instead, control logic 54 simply controls selection logic 52 to re-size incoming information of one flow control unit size to outgoing information of a different flow control unit size.

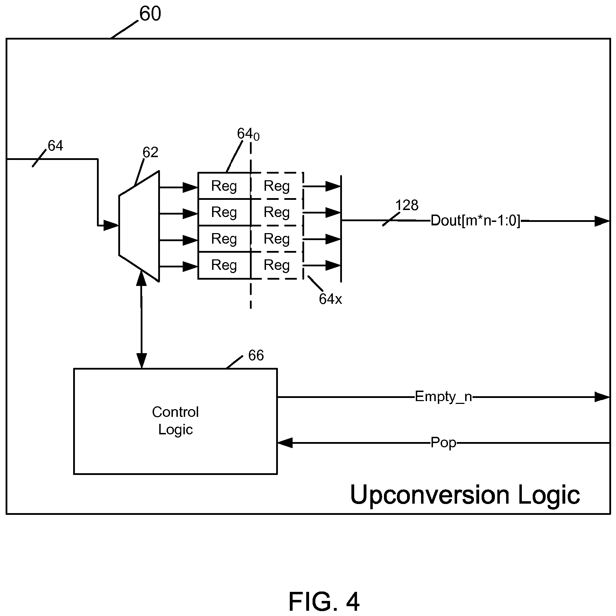

Referring now to FIG. 4, shown is a block diagram of an upconversion logic 60 in accordance with an embodiment of the present invention. As shown in FIG. 4, upconversion logic 60 includes a selection logic 66, which in an embodiment may be a demultiplexer or other logic. As seen, incoming information is received at a first bit width (e.g., 64 bits) and is output at a second bit width (e.g., 128 bits) from selection logic 66. More specifically, the information output by selection logic 66 is provided to a set of storage elements 64₀-64ₓ. In the embodiment shown, four such storage elements are present. In different embodiments, the storage elements may take the form of registers, double-buffered registers or so forth. In embodiments, a single register design may introduce an empty bubble of one clock cycle, when the assembled word is consumed, and after the register is drained next word fragments are allowed to enter. With a double-buffered register design, one buffer is used for assembly of fragments while the other buffer is used to store assembled fragments until they are consumed.

Still with reference to FIG. 4, when controlled by control logic 66, output information is output at a second bit width (e.g., 128 bits) as dout [mxn-1:0]. As further seen, control logic 66 receives an incoming control indicator, pop, which indicates when the full output word has been sent, such that new flits can begin to be merged. And control logic 66 outputs a not empty indicator, empty_n, as discussed above. Note that in upconversion logic 60, the empty_n signal will be low for several cycles while the wide output word is collected from the narrow incoming fragments. Although shown at this high level in the embodiment of FIG. 4, understand that many variations and alternatives are possible.

Each instantiation of upconversion logic 60 within an NoC may have a configurable input bit width and output bit width, as appropriate for interconnection between different logics, agents and or interconnects operating at different native bit widths. Note that control logic 64 need not inspect the incoming information or any portion of it (such as a header portion or command portion) to determine a type of packet or to perform any type of re-coding of any information therein. Instead, control logic 66 simply controls selection logic 62 to re-size incoming information of one flow control unit size to outgoing information of a different flow control unit size. Of the flit information, only the EOP or flit-type bit column(s) may be manipulated to produce legal packet frames.

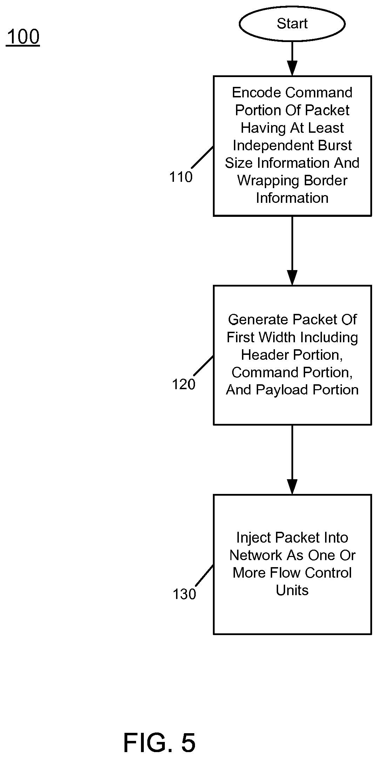

Referring now to FIG. 5, shown is a flow diagram of a method for encoding a packet in accordance with an embodiment of the present invention. As shown in FIG. 5, method 100 may be performed by a combination of hardware, software and/or firmware of a component of a NoC. For example, encoding logic of an agent of an SoC may perform method 100. In other cases, method 100 may be performed by encoding logic of a network interface that couples between a given agent and another location, such as a router or so forth. In the embodiment shown, method 100 begins by encoding a command portion of a packet having at least independent burst size information and independent wrapping border information (block 110). That is, while a particular command encoding may include additional information, at least this size and wrapping border information is present. In different implementations, an encoding may be in accordance with one of the approaches discussed above as to Tables 1 - 4. Note that the term "independent" with regard to burst size and wrapping border information means that this information is unassociated with a native bit width of the encoder agent. Further, this information is also "independent" or static as it traverses the network such that no re-coding operations are performed on a path from source to destination.

Still referring to FIG. 5, control next passes to block 120 where a packet of a first width is generated. More specifically, this packet includes a header portion, a command portion, and a payload portion. Next at block 130 the packet may be injected into the network as one or more flow control units. For example, in a case where a source agent and a router to which the network interface couples both operate at a native bit width of 64 bits, a flow control unit also may be 64 bits, such that a single flit is injected into the router from the network interface. In other cases, a different flit size, such as 32 bits or another bit with may be used. Although shown at this high level in the embodiment of FIG. 5, understand many variations and alternatives are possible.

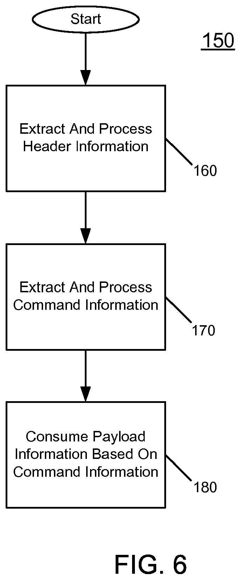

Referring now to FIG. 6, shown is a flow diagram of a method for processing a command portion of a packet at a destination location in accordance with an embodiment of the present invention. As shown in FIG. 6, method 150 may be performed by a combination of hardware, software and/or firmware of a component of a SoC, such as decoding logic of a given destination of a packet.

Method 150 begins by extracting and processing header information of the packet (block 160). Understand that such header information may include various information, including source and destination information, among other such information, such as packet format, if there are multiple formats of different length and command information content, quality of service (QoS) indications and so forth. Next control passes to block 170 where command information of the packet may be extracted and processed. This command information corresponds to the encoded burst command as generated above with regard to FIG. 5 and including a given one of the various command encoding approaches of Tables 1 - 4. Based on the extracted information, a size of the burst, wrapping borders, and potentially other information may be obtained. Then using this information, a payload portion of the packet may be consumed (block 180). For example, the data of the payload may be stored in an appropriate location and consumed by the destination agent. Many alternatives and variations are possible within the high level description of the embodiment of FIG. 6.

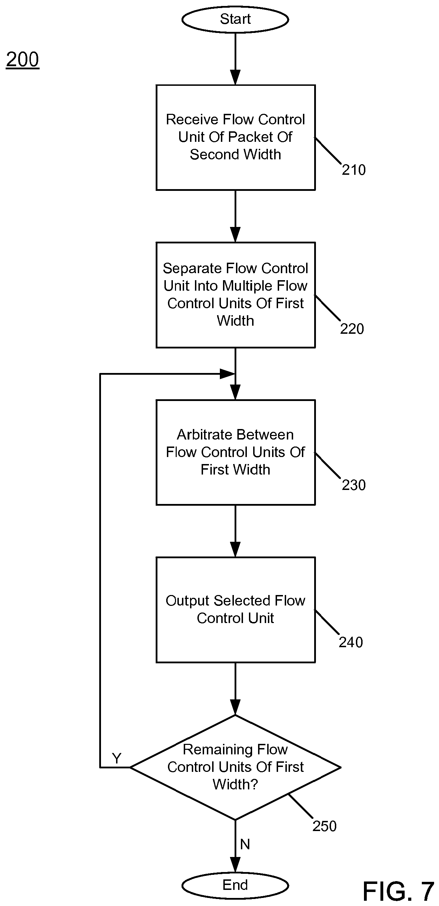

Referring now to FIG. 7, shown is a flow diagram of a method for performing a downconversion link width operation in accordance with an embodiment of the present invention. As shown in FIG. 7, method 200 may be performed by a downconversion logic when a link width change occurs on a path between a source and destination. As seen, method 200 begins by receiving a flow control unit of a packet of a second width (block 210). Assume for purposes of discussion that this second width is 128 bits and the flow control unit is also 128 bits. In this case, the received flow control unit can be separated into multiple flow control units of a first width (for example, 64 bits) (block 220). Thus in this case, an incoming flit can be separated into 2 different flits. Note however that no analysis of the incoming packet or re-coding is performed. Control next passes to block 230 where an arbitration or selection process may occur between these multiple flow control units of the first width. Thereafter, control passes to block 240 where the selected flow control unit can be output. Next it is determined at diamond 250 whether any flow control units of the first width remain. If so, control passes back to block 230 discussed above. Otherwise, method 200 concludes for the particular packet. This downconversion process thus is performed in which no re-coding of command or other information occurs; rather the packet is simply downsized from one width to another and the end-of-packet information is deferred to the last flit of the downsized packet.

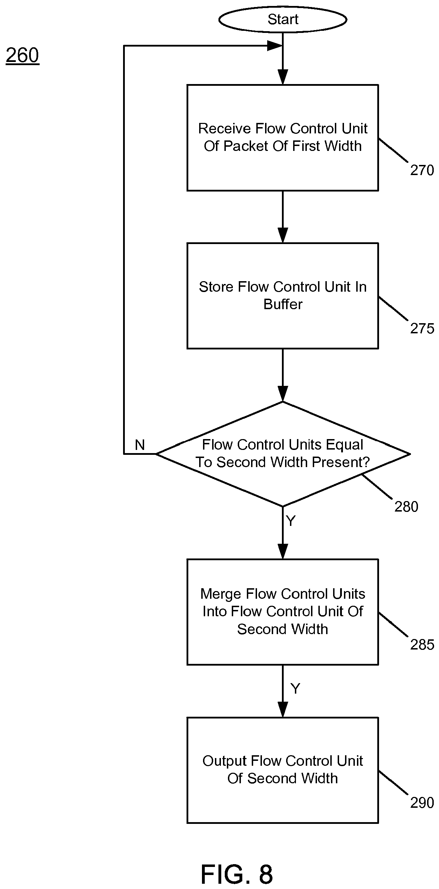

Referring now to FIG. 8, shown is a flow diagram of a method for performing an upconversion link width operation in accordance with an embodiment of the present invention. As shown in FIG. 8, method 260 may be performed by an upconversion logic when a link width change occurs on a path between a source and destination. As seen, method 260 begins by receiving a flow control unit of a packet of a first width (block 270). Assume for purposes of discussion that this second width is 32 bits and the flow control unit is also 32 bits. In this case, the received flow control unit can be merged into a single flow control unit of a second width (which assume for purposes of discussion is 128 bits). To this end, the received flow control unit can be stored in a buffer (block 275). Next it is determined whether the buffer stores flow control units equal to the second width (diamond 280). If not, control passes back to block 270.

Otherwise, when the appropriate number of flow control units have been received, control passes to block 285, where the multiple flits (e.g., 4) can be merged into a single flow control unit of the second flit (block 285). Note however that no analysis of the incoming packet or re-coding is performed. Control next passes to block 290 where the flow control unit of the second width can be output. At this point, method 260 concludes for the particular packet to be upconverted and output. This upconversion process thus is performed in which no re-coding of command or other information occurs; rather the packet is simply upsized from one width to another, only the end-of-packet information is given with the last flit of the upsized packet.

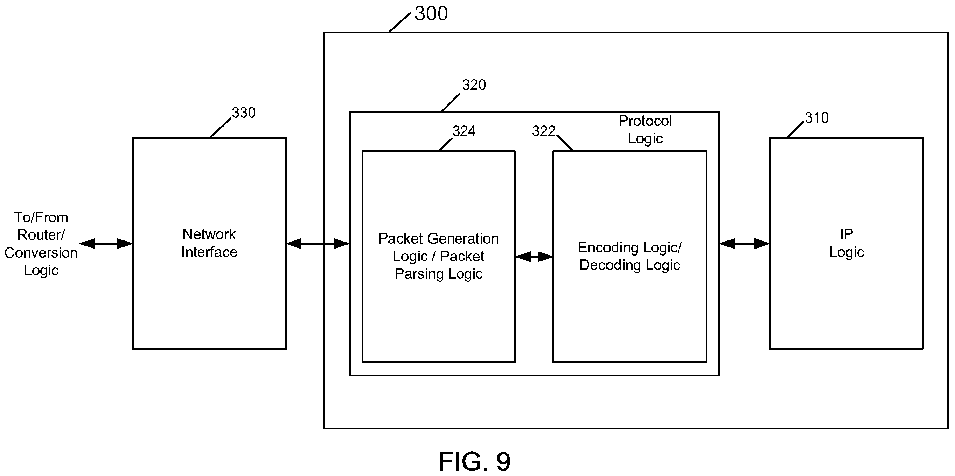

Referring now to FIG. 9, shown is a block diagram of a portion of an SoC in accordance with an embodiment of the present invention. As shown in FIG. 9, an IP block 300 is coupled to a network interface 330. In turn, network interface 330 is coupled to a router and/or conversion logic (e.g., upconversion and downconversion logic), in cases where a link width change occurs between the network interface and the router. Understand that while network interface 330 is illustrated to be coupled to only a single IP block, in other cases it is possible for a network interface to couple to multiple IP blocks, such as a plurality of cores of a domain or other portion of circuitry, e.g., configured to operate at an independent voltage and/or frequency.

In the high level illustration of FIG. 9, IP block 300 includes an IP logic 310, which may correspond to a core or other processing unit. In some cases, IP logic 310 may be a third party-designed IP block to be adapted within an SoC. As such, a SoC vendor may receive one or more data files including data and/or instructions that represent IP logic 310. In the high level view of FIG. 9, IP logic 310 couples to a protocol logic 320. In an embodiment, protocol logic 320 may act as an interface to interface IP logic 310 to network interface 330. In the particular implementation shown, protocol logic 320 includes an encoding logic/decoding logic 322 which may, responsive to receipt of information (e.g., a transaction) from IP logic 310 encode the information into a packet-based format including a header portion, a command portion and a payload portion.

For the embodiments described herein, encoding logic 322 encodes a burst command as described above into a command portion of the packet. In turn, packet generation logic 324 receives the various portions from encoding logic 322 and generates a packet therefrom. The packet then may be communicated via network interface 330 to a desired destination location. Understand that in a receive direction, incoming packets received from network interface 330 are provided to a packet parsing logic portion of logic 324 where the packet can be parsed into its constituent portions, which are provided to decoding logic portion of logic 322 so that the portions may be decoded and appropriate information provided to IP logic 310 (e.g., a transaction within the packet). Understand while shown at this high level in the embodiment of FIG. 9, many variations and alternatives are possible.

Because IP block 300 and its associated network interface may operate at a native bit width different than other portions of the SoC, understand that interposed between network interface 330 and a router or other destination may be appropriate upconversion and/or downconversion logic as described herein. Of course in other implementations, such conversion logic may be present within the network interface itself, within a router or other network elements of the SoC, and in some cases such conversion logic may be present within an IP block itself.

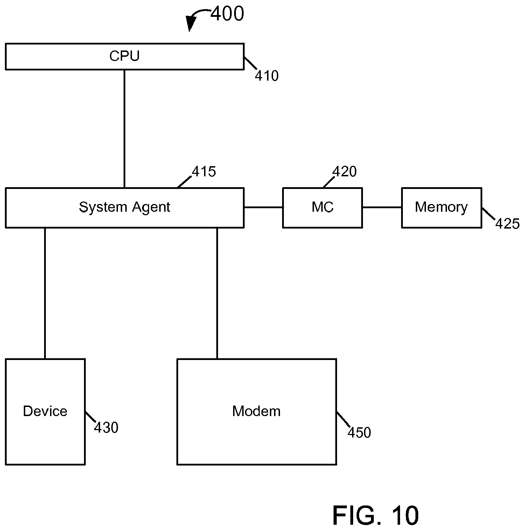

Referring now to FIG. 10, shown is a block diagram of an SoC in accordance with an embodiment of the present invention. As shown in FIG. 10, SoC 400 may be an SoC for inclusion in a communication device such as a smartphone, cellular telephone, tablet computer or so forth. In the embodiment shown, SoC 400 includes a central processing unit (CPU) 410 which may be a main processor of the SoC and can include multiple cores, e.g., multiple homogeneous and/or heterogeneous cores having a mix of different power consumption levels. In turn, CPU 410 may couple to a system agent 415 via an interconnect (e.g., an in-die interconnect (IDI). In general, system agent 415 may include various non-core circuitry of the SoC, such as cache memory, power management circuitry, interface circuitry and so forth.

As further shown in FIG. 10, system agent 415 may couple to a memory controller 420 that in turn is coupled to a memory 425, which in an embodiment may be an internal memory of the SoC, e.g., configured on a single semiconductor die with the other circuitry, or present in a SoC package on a separate die. In some instances, memory 425 may be implemented as a dynamic random access memory (DRAM).

With further reference to FIG. 10, an integrated device 430 couples to system agent 415. Such integrated device may take many different forms, but may be a particular IP block, e.g., of the SoC manufacturer or a third party. Still with reference to FIG. 10, a modem 450 is further coupled to system agent 415. In various embodiments, modem 450 may include a plurality of individual processing elements, each configured to handle modem functions (modulation and demodulation functions) for a particular communication protocol, such as a given cellular communication protocol, a wireless local area network protocol or so forth. In various embodiments, modem 450 may include a NoC that leverages the command encoding described herein to seamlessly enable packet-based communications between various components within and external to modem 450 without performing re-coding at link width changes.

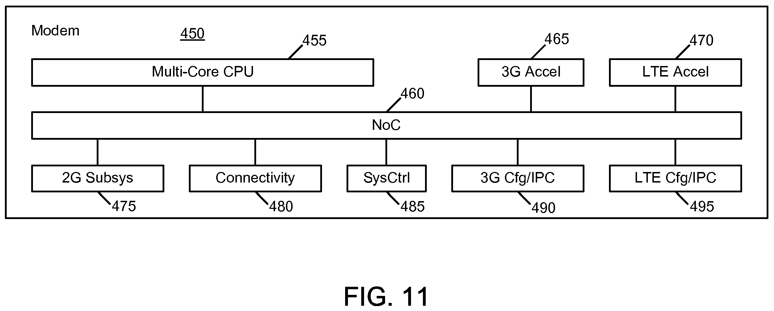

Referring now to FIG. 11, shown is a block diagram of a representative modem in accordance with an embodiment. As shown in FIG. 11, modem 450 may correspond to modem 450 of FIG. 10. As seen, modem 450 itself may include a CPU portion 455 that may be implemented as a plurality of cores. CPU 455 in turn couples to NoC 460, which provides a communication fabric for interaction between various IP blocks within the modem. In the illustration shown, these IP blocks include a 3G accelerator 465, an LTE accelerator 470, a 2G subsystem 475, a connectivity module 480, a system controller 485, and a 3G configuration/IPC module 490 and a LTE configuration/IPC module 495. Various of these IP blocks may operate at different native bit widths and accordingly, each may be connected to NoC 460 by a link of a particular bit width. To effect efficient communications in this packet-based system, various IP blocks may be configured to encode commands of a packet-based communication scheme as described herein, allowing upconversion and downconversion to occur within NoC 460 seamlessly and in a low latency, low-power manner. Many variations and alternatives are possible within the high level description in the view of FIG. 11.

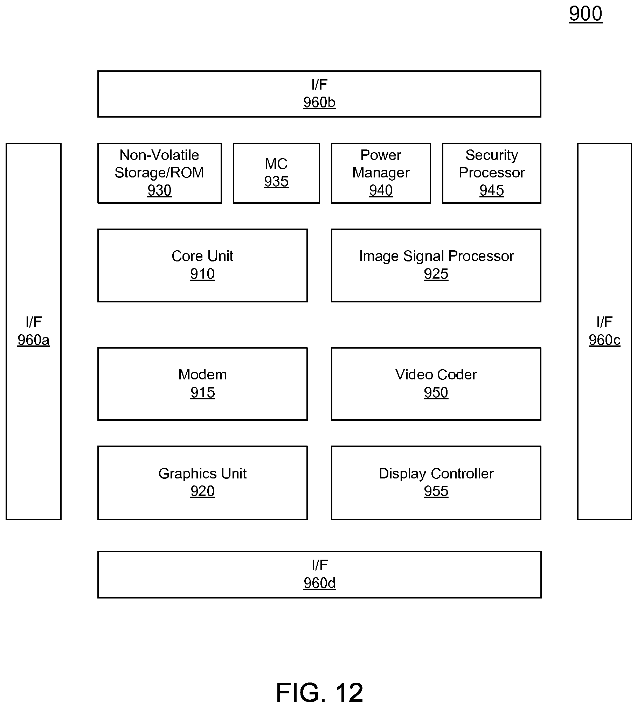

Understand that SoCs (or other integrated circuits) including a NoC as described herein can be used in many different systems, ranging from small portable devices to high performance computing systems and networks. Referring now to FIG. 12, shown is a block diagram of a system in accordance with an embodiment of the present invention. In the embodiment of FIG. 12, system 900 may be a SoC including multiple domains, each of which may be controlled to operate at an independent operating voltage and operating frequency. Note that the domains each may be a heterogeneous island including a network switch and interconnected as described herein. As a specific illustrative example, system 900 may be an Intel@ Architecture Core™-based SoC such as an i3, i5, i7 or another such processor available from Intel Corporation. However, other low power SoCs or processors such as available from Advanced Micro Devices, Inc. (AMD) of Sunnyvale, CA, an ARM-based design from ARM Holdings, Ltd. or licensee thereof or a MIPS-based design from MIPS Technologies, Inc. of Sunnyvale, CA, or their licensees or adopters may instead be present in other embodiments such as an Apple A7 processor, a Qualcomm Snapdragon processor, or Texas Instruments OMAP processor. Such SoC may be used in a low power system such as a smartphone, tablet computer, phablet computer, Ultrabook™ computer, loT device, wearable, or other portable computing device.

In the high level view shown in FIG. 12, SoC 900 includes a core unit 910 which may include one or more processor cores of one or more instructions sets (e.g., an x86 instruction set (with some extensions that have been added with newer versions); a MIPS instruction set; an ARM instruction set (with optional additional extensions such as NEON)) or other instruction set or combinations thereof. Note that some of the core units may be heterogeneous resources (e.g., of a different design). In addition, each such core may be coupled to a cache memory (not shown) which in an embodiment may be a shared level (L2) cache memory. A non-volatile storage 930 may be used to store various program and other data. For example, this storage may be used to store at least portions of microcode, boot information such as a BIOS, other system software or so forth.

Core unit 910 may also include an interface such as a network interface to enable interconnection to additional circuitry of the SoC. In an embodiment, core unit 910 couples to a coherent fabric formed of an on-die interconnect that implements the command encoding described herein and which may act as a primary cache coherent on-die interconnect that in turn couples to a memory controller 935. In turn, memory controller 935 controls communications with a memory such as a DRAM (not shown for ease of illustration in FIG. 12).

In addition to core unit, additional processing engines are present within the processor, including a modem 915 (which may include an NoC that implements the described command encoding), at least one graphics unit 920 which may include one or more graphics processing units (GPUs) to perform graphics processing as well as to possibly execute general purpose operations on the graphics processor (so-called GPGPU operation). In addition, at least one image signal processor 925 may be present. Signal processor 925 may be configured to process incoming image data received from one or more capture devices, either internal to the SoC or off-chip.

Other accelerators also may be present. In the illustration of FIG. 12, a video coder 950 may perform coding operations including encoding and decoding for video information, e.g., providing hardware acceleration support for high definition video content. A display controller 955 further may be provided to accelerate display operations including providing support for internal and external displays of a system. In addition, a security processor 945 may be present to perform security operations. Each of the units may have its power consumption controlled via a power manager 940, which may include control logic to perform various power management techniques.

In some embodiments, SoC 900 may further include a non-coherent fabric coupled to the coherent fabric to which various peripheral devices may couple. One or more interfaces 960a-960d enable communication with one or more off-chip devices. Such communications may be according to a variety of communication protocols such as PCIe™, GPIO, USB, I²C, UART, MIPI, SDIO, DDR, SPI, HDMI, among other types of communication protocols. The scope of the present invention is not limited in this regard.

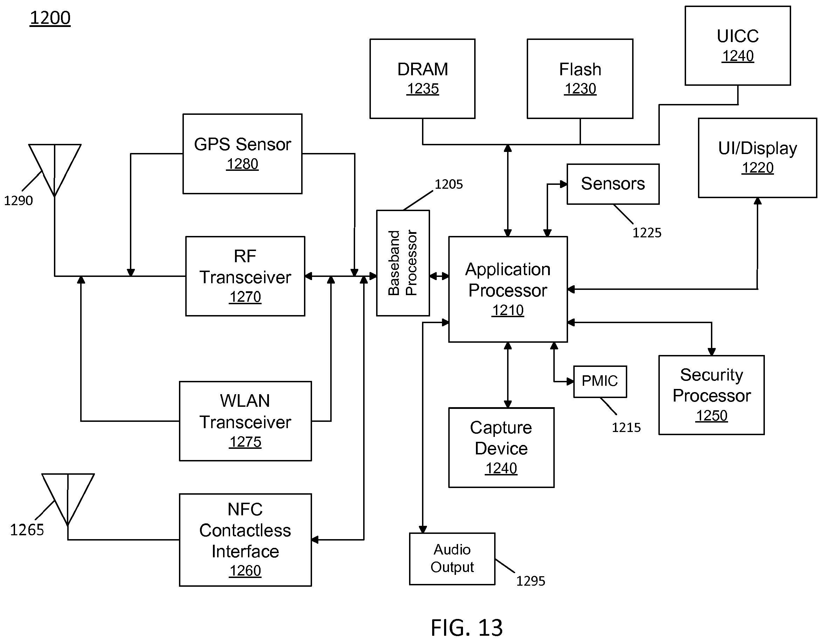

Referring now to FIG. 13, shown is a block diagram of an example system with which embodiments can be used. As seen, system 1200 may be a smartphone or other wireless communicator. A baseband processor 1205 is configured to perform various signal processing with regard to communication signals to be transmitted from or received by the system. In turn, baseband processor 1205 is coupled to an application processor 1210, which may be a main SoC of the system to execute an OS and other system software, in addition to user applications such as many well-known social media and multimedia apps. Application processor 1210 may further be configured to perform a variety of other computing operations for the device, and may include an interconnect architecture that uses the command encoding described herein.

In turn, application processor 1210 can couple to a user interface/display 1220, e.g., a touch screen display. In addition, application processor 1210 may couple to a memory system including a non-volatile memory, namely a flash memory 1230 and a system memory, namely a dynamic random access memory (DRAM) 1235. As further seen, application processor 1210 further couples to a capture device 1240 such as one or more image capture devices that can record video and/or still images.

Still referring to FIG. 13, a universal integrated circuit card (UICC) 1240 comprising a subscriber identity module and possibly a secure storage and cryptoprocessor is also coupled to application processor 1210. System 1200 may further include a security processor 1250 that may couple to application processor 1210. A plurality of sensors 1225 may couple to application processor 1210 to enable input of a variety of sensed information such as accelerometer and other environmental information. An audio output device 1295 may provide an interface to output sound, e.g., in the form of voice communications, played or streaming audio data and so forth.

As further illustrated, a near field communication (NFC) contactless interface 1260 is provided that communicates in a NFC near field via an NFC antenna 1265. While separate antennae are shown in FIG. 13, understand that in some implementations one antenna or a different set of antennae may be provided to enable various wireless functionality.

A power management integrated circuit (PMIC) 1215 couples to application processor 1210 to perform platform level power management. To this end, PMIC 1215 may issue power management requests to application processor 1210 to enter certain low power states as desired. Furthermore, based on platform constraints, PMIC 1215 may also control the power level of other components of system 1200.

To enable communications to be transmitted and received, various circuitry may be coupled between baseband processor 1205 and an antenna 1290. Specifically, a radio frequency (RF) transceiver 1270 and a wireless local area network (WLAN) transceiver 1275 may be present. In general, RF transceiver 1270 may be used to receive and transmit wireless data and calls according to a given wireless communication protocol such as 3G or 4G wireless communication protocol such as in accordance with a code division multiple access (CDMA), global system for mobile communication (GSM), long term evolution (LTE) or other protocol. In addition a GPS sensor 1280 may be present. Other wireless communications such as receipt or transmission of radio signals, e.g., AM/FM and other signals may also be provided. In addition, via WLAN transceiver 1275, local wireless communications, such as according to a Bluetooth™ standard or an IEEE 802.11 standard such as IEEE 802.11a/b/g/n can also be realized.

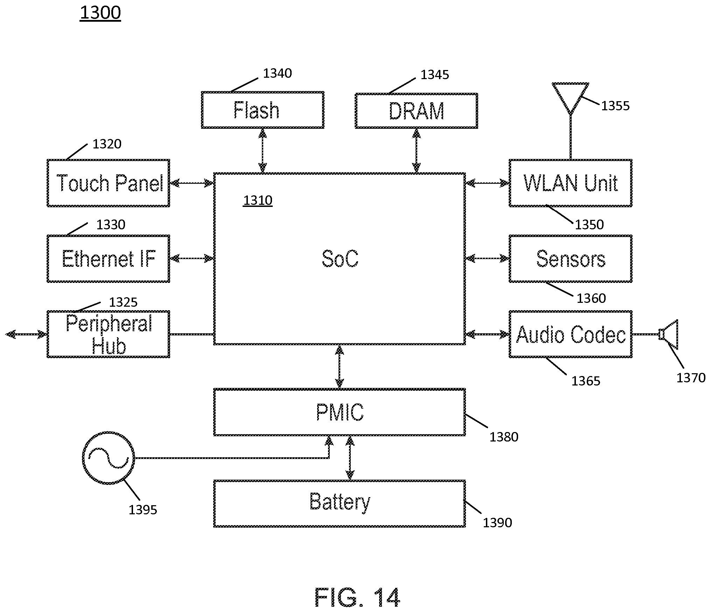

Referring now to FIG. 14, shown is a block diagram of another example system with which embodiments may be used. In the illustration of FIG. 14, system 1300 may be mobile low-power system such as a tablet computer, 2:1 tablet, phablet or other convertible or standalone tablet system. As illustrated, a SoC 1310 is present and may be configured to operate as an application processor for the device. SoC 1310 may include an interconnect architecture using the command encoding as described herein.

A variety of devices may couple to SoC 1310. In the illustration shown, a memory subsystem includes a flash memory 1340 and a DRAM 1345 coupled to SoC 1310. In addition, a touch panel 1320 is coupled to the SoC 1310 to provide display capability and user input via touch, including provision of a virtual keyboard on a display of touch panel 1320. To provide wired network connectivity, SoC 1310 couples to an Ethernet interface 1330. A peripheral hub 1325 is coupled to SoC 1310 to enable interfacing with various peripheral devices, such as may be coupled to system 1300 by any of various ports or other connectors.

In addition to internal power management circuitry and functionality within SoC 1310, a PMIC 1380 is coupled to SoC 1310 to provide platform-based power management, e.g., based on whether the system is powered by a battery 1390 or AC power via an AC adapter 1395. In addition to this power source-based power management, PMIC 1380 may further perform platform power management activities based on environmental and usage conditions. Still further, PMIC 1380 may communicate control and status information to SoC 1310 to cause various power management actions within SoC 1310.

Still referring to FIG. 14, to provide for wireless capabilities, a WLAN unit 1350 is coupled to SoC 1310 and in turn to an antenna 1355. In various implementations, WLAN unit 1350 may provide for communication according to one or more wireless protocols, including an IEEE 802.11 protocol, a Bluetooth™ protocol or any other wireless protocol.

As further illustrated, a plurality of sensors 1360 may couple to SoC 1310. These sensors may include various accelerometer, environmental and other sensors, including user gesture sensors. Finally, an audio codec 1365 is coupled to SoC 1310 to provide an interface to an audio output device 1370. Within the particular implementation in FIG. 14, many variations and alternatives are possible.

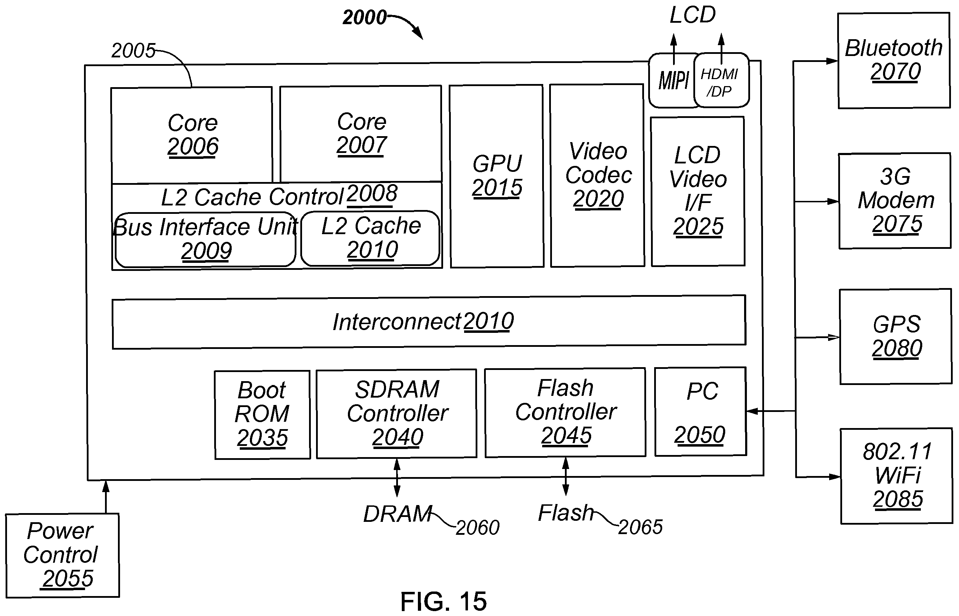

Turning next to FIG. 15, an embodiment of a SoC design in accordance with an embodiment is depicted. As a specific illustrative example, SoC 2000 is included in user equipment (UE). In one embodiment, UE refers to any device to be used by an end user, such as a wearable, hand-held phone, smartphone, tablet, ultra-thin notebook, notebook, loT device, or any other similar device. Often a UE connects to a base station or node, which potentially corresponds in nature to a mobile station (MS) in a GSM network.

Here, SoC 2000 includes 2 cores-2006 and 2007. Similar to the discussion above, cores 2006 and 2007 may conform to an Instruction Set Architecture, such as an Intel® Architecture Core™-based processor, an Advanced Micro Devices, Inc. (AMD) processor, a MIPS-based processor, an ARM-based processor design, or a customer thereof, as well as their licensees or adopters. Cores 2006 and 2007 are coupled to cache control 2008 that is associated with bus interface unit 2009 and L2 cache 2010 to communicate with other parts of system 2000. Interconnect 2010 includes an on-chip interconnect, and which may implement the command encoding described herein.

Interconnect 2010 provides communication channels to the other components, such as a boot ROM 2035 to hold boot code for execution by cores 2006 and 2007 to initialize and boot SOC 2000, a SDRAM controller 2040 to interface with external memory (e.g. DRAM 2060), a flash controller 2045 to interface with non-volatile memory (e.g. Flash 2065), a peripheral controller 2050 (e.g. Serial Peripheral Interface) to interface with peripherals, video codecs 2020 and Video interface 2025 to display and receive input (e.g. touch enabled input) via one of MIPI or HDMI/DP interface, GPU 2015 to perform graphics related computations, etc.

In addition, the system illustrates peripherals for communication, such as a Bluetooth module 2070, 3G modem 2075, GPS 2080, and WiFi 2085. Also included in the system is a power controller 2055.

The following pertains to further embodiments.

In one embodiment, a NoC comprises: an IP logic including at least one processing element to perform operations on data; a protocol logic to generate a transaction to be sent from the IP logic, and a packet insertion logic to insert the packet into a network. The protocol logic comprises: an encoding logic to encode a command portion of a packet associated with the transaction, the command portion having a width independent encoding and including a first field to indicate a burst size and a second field to indicate a wrapping border and a packet generation logic to generate the packet including a header portion, the command portion and a payload portion. In an implementation, the wrapping border delineates between a start border and an end border.

In an embodiment, the NoC further comprises an upconversion logic to receive a second packet at a first width and to upconvert the second packet to a second width, where the upconversion logic is to maintain an original encoding of a command portion of the second packet, the second width greater than the first width.

In an embodiment, the upconversion logic is to merge a plurality of flow control units of the second packet, the plurality of flow control units of the first width, into one or more flow control units of the second width, and maintain the original encoding of the command portion.

In an embodiment, the upconversion logic comprises: a selection logic to receive the plurality of flow control units; a control logic to control the selection logic; and a buffer coupled to the selection logic to store the one or more flow control units of the second width.

In an embodiment, the NoC of one or more of the embodiments of paragraphs 89 to 92 further comprises a downconversion logic to receive the packet at a second width and to downconvert the packet to a first width, where the downconversion logic is to maintain an original encoding of the command portion of the packet, the second width greater than the first width.

In an embodiment, the downconversion logic is to separate a flow control unit of the packet, the flow control unit of the second width, into a plurality of flow control units of the first width, and maintain the original encoding of the command portion.

In an embodiment, the downconversion logic comprises: a selection logic to receive the plurality of flow control units; and a control logic to control the selection logic.

In an embodiment, the encoding logic is further to encode an address sequence type into the command portion.

In an embodiment, a packet may be re-packetized one or more times in transmission from the packet insertion logic to a destination network interface coupled to a destination IP logic, the re-packetization to occur in which the width independent encoding of the command portion is maintained.

Note that the above NoC can be implemented using various means.

In an embodiment, the NoC may be implemented in a SoC in turn incorporated in a user equipment touch-enabled device.

In another embodiment, a system comprises a display and a memory, and includes a processor having the NoC of one or more of the above embodiment.

In another example (not claimed), an apparatus comprises: a source agent including at least one logic unit to perform instructions; an encoder to encode a burst command portion of a packet having a first field to indicate a burst size and a second field to indicate a data width of one of the source agent and a destination agent, where the burst size and the data width are to remain fixed when the packet is to be re-sized one or more times during transmission from the source agent to the destination agent; and transmission logic to transmit the packet including the burst command portion, where the packet is to further include a data portion.

In an example (not claimed), the apparatus further comprises a first router coupled to the source agent via a first link having a first link width and to route the packet from the source agent to the destination agent via a second link having a second link width, the first link width different than the second link width.

In an example (not claimed), the apparatus further comprises a first upconversion logic to receive the packet at the first link width and to output the packet at the second link width, the second link width greater than the first link width, where the first upconversion logic is coupled to an ingress port of the first router and comprises a selection logic to receive a plurality of flow control units of the first link width, a control logic to control the selection logic, and a buffer coupled to the selection logic to store one or more flow control units of the second link width.

In an example (not claimed), the apparatus further comprises a first downconversion logic to receive the packet at the second link width and to output the packet at a third link width, the third link width less than the second link width, where the first downconversion logic is coupled to an egress portion of the first router and comprises a selection logic to receive at least one flow control unit of the second link width, and a control logic to control the selection logic.

In an example (not claimed), the encoder of one of the above Examples is to encode the burst command portion to be independent of a native data width of the source agent.

In an example (not claimed), the encoder is to encode the first field according to a smallest data transfer quantity of an agent within a network.

In an example (not claimed), the encoder is to encode the first field according to a smallest data transfer quantity of a selected one of the source agent and the destination agent.

In another example (not claimed), a machine-readable medium has stored thereon data, which if used by at least one machine, causes the at least one machine to fabricate at least one integrated circuit to perform a method comprising: encoding a command portion of a packet having an independent burst size information and an independent wrapping border information; generating a packet of a first width including a header portion, the command portion and a payload portion; and injecting the packet into a network as one or more flow control units, where the independent burst size information and the independent wrapping border information are to be unmodified when a width of the packet is modified one or more times in communication from a source agent to a destination agent.

In an example (not claimed), the method further comprises receiving a second packet at a first width and upconverting the second packet to a second width, the second width greater than the first width, including merging a plurality of flow control units of the second packet, the plurality of flow control units of the first width, into one or more flow control units of the second width.

In an example (not claimed), the method further comprises: receiving the packet at a second width and downconverting the packet to a first width, the second width greater than the first width, including separating a flow control unit of the packet, the flow control unit of the second width, into a plurality of flow control units of the first width.

In an example (not claimed), the method further comprises encoding the independent wrapping border information as a power of two.

In an example (not claimed), the method further comprises encoding the independent burst size information according to a smallest data transfer quantity of a selected one of the source agent and the destination agent.

In another embodiment, a computer readable medium including instructions is to perform the method of any of the above embodiments.

In another example, an apparatus comprises means for performing the method of any one of the above examples.

Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

## Claims

1. An apparatus (300) comprising:
a processor (310);
a packet generation logic (324) adapted to generate a first packet including a first header portion, a first command portion and a first data payload portion,
the first data payload portion comprising first data,
wherein the first command portion comprises a first independent burst size and a first independent wrapping border,
the first burst size being a size of the first data payload portion,
the apparatus being **characterized in that**:
the first burst size is in a measuring unit being a first fixed quantity,
the first wrapping border is in a measuring unit being a second fixed quantity,
in the expression fixed quantity means a quantity of data depending neither on the data width of the processor (310) nor on the data width of any of the links of a network; the apparatus is in at least one of the following three implementations:
in a wrapping burst implementation, the first wrapping border specifies a first value of an address jump between an end border and a start border of the address space used for the data by the processor (310),
in a fixed address burst implementation, the first wrapping border specifies a first value of a beat size of the processor (310), i.e. at the processor, an amount of data that can be sent by the processor (310) in a single clock cycle,
in an incrementing burst implementation, the first wrapping border specifies a first value of the first wrapping border that is possible neither in a wrapping burst implementation nor in a fixed address burst implementation,
the apparatus (300) comprises an encoding logic (322) adapted to encode the first packet with a first data width, by encoding the first command portion,
the first independent burst size and the first independent wrapping border are independent in that they are information which is unassociated with a native bit width of the encoding logic and which is static as it traverses the network such that command re-coding operations are not required, and
the apparatus (300) further comprises a packet insertion logic adapted to insert the first packet into a first link of the network, the first link having the first width.

2. The apparatus (300) of claim 1,
wherein the apparatus (300) comprises an upconversion logic (60),
wherein the apparatus (300) is adapted to receive from a second link of the network a second packet having a second data width,
the second packet including a second header portion, a second command portion and a second data payload portion;
the second link having the second data width,
wherein the upconversion logic (60) is adapted to convert the second packet into a third packet having a third data width,
the third packet including the second header portion, the second command portion and the second data payload portion,
wherein the apparatus (300) is adapted to transmit to a third link of the network the third packet,
the third link having the third data width,
the third data width being greater than the second data width.

3. The apparatus (300) of claim 1,
wherein the apparatus comprises an downconversion logic (50),
wherein the apparatus (300) is adapted to receive from a fourth link of the network a fourth packet having a third data width,
the fourth packet including a third header portion, a third command portion and a third data payload portion;
the fourth link having the third data width,
wherein the downconversion logic (50) is adapted to convert the fourth packet into a fifth packet having a second data width,
the fifth packet including the third header portion, the third command portion and the third data payload portion,
wherein the apparatus (300) is adapted to transmit to a fifth link of the network the fifth packet,
the fifth link having the second data width,
the third data width being greater than the second data width.

4. A method (100) comprising:
generating a first packet (120) including a first header portion, a first command portion and a first data payload portion,
the first data payload portion comprising first data,
wherein the first command portion comprises a first independent burst size and a first independent wrapping border,
the first burst size being a size of the first data payload portion,
the method being **characterized in that**
the first burst size is in a measuring unit being a first fixed quantity,
the first wrapping border is in a measuring unit being a second fixed quantity, the expression fixed quantity meaning a quantity of data depending neither on the data width of the processor (310) nor on the data width of any of the links of a network,
the method is in at least one of the following three implementations:
in a wrapping burst implementation, the first wrapping border specifies a first value of an address jump between an end border and a start border of the address space used for the data by the processor (310),
in a fixed address burst implementation, the first wrapping border specifies a first value of a beat size of the processor (310), i.e. at the processor (310), an amount of data that can be sent by the processor in a single clock cycle,
in an incrementing burst implementation, the first wrapping border specifies a first value of the first wrapping border that is possible neither in an wrapping burst implementation nor in a fixed address burst implementation,
and **in that** the method (100) further comprises:
encoding the first packet with a first data width, by encoding the first command portion using an encoding logic (322);
wherein the first independent burst size and the first independent wrapping border are independent **in that** they are information which is unassociated with a native bit width of the encoding logic and which is static as it traverses the network such that command re-coding operations are not required,
inserting (130) the first packet into a first link of the network, the first link having the first width.

5. The method (100) of claim 4, further comprising:
receiving from a second link of the network a second packet having a second data width,
the second packet including a second header portion, a second command portion and a second data payload portion;
the second link having the second data width,
converting the second packet into a third packet having a third data width,
the third packet including the second header portion, the second command portion and the second data payload portion,
transmitting to a third link of the network the third packet,
the third link having the third data width,
the third data width being greater than the second data width.

6. The method (100) of claim 4, further comprising:
receiving from a fourth link of the network a fourth packet having a third data width,
the fourth packet including a third header portion, a third command portion and a third data payload portion;
the fourth link having the third data width,
converting the fourth packet into a fifth packet having a second data width,
the fifth packet including the third header portion, the third command portion and the third data payload portion,
transmitting to a fifth link of the network the fifth packet,
the fifth link having the second data width,
the third data width being greater than the second data width.

7. Computer software product including executable software code being stored on a computer-readable medium and, when being executed by means of a computing device, carrying out the steps of the method (100) according to one of the claims 4 to 6.

## Patentansprüche

1. Vorrichtung (300), umfassend:
einen Prozessor (310);
eine Paketerzeugungslogik (324), die zum Erzeugen eines ersten Pakets ausgelegt ist, das einen ersten Kopfabschnitt, einen ersten Befehlsabschnitt und einen ersten Datennutzlastabschnitt umfasst,
wobei der erste Datennutzlastabschnitt erste Daten umfasst,
wobei der erste Befehlsabschnitt eine erste unabhängige Burstgröße und eine erste unabhängige Wrapping-Begrenzung umfasst,
die erste Burstgröße eine Größe des ersten Datennutzlastabschnitts ist,
die Vorrichtung **dadurch gekennzeichnet ist, dass**:
die erste Burstgröße in einer Messeinheit ist, die eine erste feste Quantität ist,
die erste Wrapping-Begrenzung in einer Messeinheit ist, die eine zweite feste Quantität ist,
im Ausdruck feste Quantität eine Quantität von Daten bedeutet, die weder von der Datenbreite des Prozessors (310) noch von der Datenbreite eines der Links des Netzwerks abhängt; wobei die Vorrichtung in mindestens einer der drei folgenden Implementierungen ist:
in einer Wrapping-Burst-Implementierung, wobei die erste Wrapping-Begrenzung einen ersten Wert eines Adresssprungs zwischen einer Endbegrenzung und einer Anfangsbegrenzung des Adressraums spezifiziert, der durch den Prozessor (310) für die Daten verwendet wird,
in einer Implementierung eines festen Adressbursts, wobei die Wrapping-Begrenzung einen ersten Wert einer Beat-Größe des Prozessors (310), d. h. einer Menge von Daten am Prozessor spezifiziert, die durch den Prozessor (310) in einem einzigen Taktzyklus gesendet werden kann,
in einer Implementierung eines inkrementierenden Bursts, wobei die erste Wrapping-Begrenzung einen ersten Wert der ersten Wrapping-Begrenzung spezifiziert, der weder in einer Wrapping-Burst-Implementierung noch in einer Implementierung eines festen Adressbursts möglich ist,
wobei die Vorrichtung (300) eine Codierlogik (322) umfasst, die zum Codieren des ersten Pakets mit einer ersten Datenbreite durch Codieren des ersten Befehlsabschnitts ausgelegt ist,
die erste unabhängige Burstgröße und die erste unabhängige Wrapping-Begrenzung insofern unabhängig sind, als sie Informationen sind, welche nicht mit einer nativen Bitbreite der Codierlogik assoziiert sind, und welche statisch sind, wenn sie das Netzwerk durchlaufen, derart dass keine Befehlsneucodierungsoperationen erforderlich sind, und
die Vorrichtung (300) ferner eine Paketeinfügungslogik umfasst, die zum Einfügen des ersten Pakets in einen ersten Link des Netzwerks ausgelegt ist, wobei der erste Link die erste Breite aufweist.

2. Vorrichtung (300) nach Anspruch 1,
wobei die Vorrichtung (300) eine Aufwärtsumsetzlogik (60) umfasst,
wobei die Vorrichtung (300) zum Empfangen eines zweiten Pakets mit einer zweiten Datenbreite von einem zweiten Link des Netzwerks ausgelegt ist,
das zweite Paket einen zweiten Kopfabschnitt, einen zweiten Befehlsabschnitt und einen zweiten Datennutzlastabschnitt umfasst;
der zweite Link die zweite Datenbreite aufweist,
die Aufwärtsumsetzlogik (60) zum Umsetzen des zweiten Pakets in ein drittes Paket mit einer dritten Datenbreite ausgelegt ist,
das dritte Paket den zweiten Kopfabschnitt, den zweiten Befehlsabschnitt und den zweiten Datennutzlastabschnitt umfasst,
die Vorrichtung (300) zum Senden des dritten Pakets an einen dritten Link des Netzwerks ausgelegt ist,
der dritte Link die dritte Datenbreite aufweist, die dritte Datenbreite größer als die zweite Datenbreite ist.

3. Vorrichtung (300) nach Anspruch 1,
wobei die Vorrichtung eine Abwärtsumsetzlogik (50) umfasst,
wobei die Vorrichtung (300) zum Empfangen eines vierten Pakets mit einer dritten Datenbreite von einem vierten Link des Netzwerks ausgelegt ist,
das vierte Paket einen dritten Kopfabschnitt, einen dritten Befehlsabschnitt und einen dritten Datennutzlastabschnitt umfasst;
der vierte Link die dritte Datenbreite aufweist, die Abwärtsumsetzlogik (50) zum Umsetzen des vierten Pakets in ein fünftes Paket mit einer zweiten Datenbreite ausgelegt ist,
das fünfte Paket den dritten Kopfabschnitt, den dritten Befehlsabschnitt und den dritten Datennutzlastabschnitt umfasst;
die Vorrichtung (300) zum Senden des fünften Pakets an einen fünften Link des Netzwerks ausgelegt ist,
der fünfte Link die zweite Datenbreite aufweist, die dritte Datenbreite größer als die zweite Datenbreite ist.

4. Verfahren (100), umfassend:
Erzeugen eines ersten Pakets (120), das einen ersten Kopfabschnitt, einen ersten Befehlsabschnitt und einen ersten Datennutzlastabschnitt umfasst;
wobei der erste Datennutzlastabschnitt erste Daten umfasst,
wobei der erste Befehlsabschnitt eine erste unabhängige Burstgröße und eine erste unabhängige Wrapping-Begrenzung umfasst,
die erste Burstgröße eine Größe des ersten Datennutzlastabschnitts ist,
das Verfahren **dadurch gekennzeichnet ist, dass**
die erste Burstgröße in einer Messeinheit ist, die eine erste feste Quantität ist,
die erste Wrapping-Begrenzung in einer Messeinheit ist, die eine zweite feste Quantität ist, wobei der Ausdruck feste Quantität eine Quantität von Daten bedeutet, die weder von der Datenbreite des Prozessors (310) noch von der Datenbreite eines der Links des Netzwerks abhängt;
das Verfahren in mindestens einer der drei folgenden Implementierungen ist:
in einer Wrapping-Burst-Implementierung, wobei die erste Wrapping-Begrenzung einen ersten Wert eines Adresssprungs zwischen einer Endbegrenzung und einer Anfangsbegrenzung des Adressraums spezifiziert, der durch den Prozessor (310) für die Daten verwendet wird,
in einer Implementierung eines festen Adressbursts, wobei die Wrapping-Begrenzung einen ersten Wert einer Beat-Größe des Prozessors (310), d. h. einer Menge von Daten am Prozessor (310) spezifiziert, die durch den Prozessor (310) in einem einzigen Taktzyklus gesendet werden kann,
in einer Implementierung eines inkrementierenden Bursts, wobei die erste Wrapping-Begrenzung einen ersten Wert der ersten Wrapping-Begrenzung spezifiziert, der weder in einer Wrapping-Burst-Implementierung noch in einer Implementierung eines festen Adressbursts möglich ist,
und dadurch, dass das Verfahren (100) ferner umfasst:
Codieren des ersten Pakets mit einer ersten Datenbreite durch Codieren des ersten Befehlsabschnitts unter Verwendung einer Codierlogik (322);
wobei die erste unabhängige Burstgröße und die erste unabhängige Wrapping-Begrenzung insofern unabhängig sind, als sie Informationen sind, welche nicht mit einer nativen Bitbreite der Codierlogik assoziiert sind, und welche statisch sind, wenn sie das Netzwerk durchlaufen, derart dass keine Befehlsneucodierungsoperationen erforderlich sind,
Einfügen (130) des ersten Pakets in einen ersten Link des Netzwerks, wobei der erste Link die erste Breite aufweist.

5. Verfahren (100) nach Anspruch 4, ferner umfassend:
Empfangen eines zweiten Pakets mit einer zweiten Datenbreite von einem zweiten Link des Netzwerks,
wobei das zweite Paket einen zweiten Kopfabschnitt, einen zweiten Befehlsabschnitt und einen zweiten Datennutzlastabschnitt umfasst;
der zweite Link die zweite Datenbreite aufweist,
Umsetzen des zweiten Pakets in ein drittes Paket mit einer dritten Datenbreite,
wobei das dritte Paket den zweiten Kopfabschnitt, den zweiten Befehlsabschnitt und den zweiten Datennutzlastabschnitt umfasst,
Senden des dritten Pakets an einen dritten Link des Netzwerks,
wobei der dritte Link die dritte Datenbreite aufweist,
die dritte Datenbreite größer als die zweite Datenbreite ist.

6. Verfahren (100) nach Anspruch 4, ferner umfassend:
Empfangen eines vierten Pakets mit einer dritten Datenbreite von einem vierten Link des Netzwerks,
wobei das vierte Paket einen dritten Kopfabschnitt, einen dritten Befehlsabschnitt und einen dritten Datennutzlastabschnitt umfasst;
der vierte Link die dritte Datenbreite aufweist,
Umsetzen des vierten Pakets in ein fünftes Paket mit einer zweiten Datenbreite,
wobei das fünfte Paket den dritten Kopfabschnitt, den dritten Befehlsabschnitt und den dritten Datennutzlastabschnitt umfasst;
Senden des fünften Pakets an einen fünften Link des Netzwerks,
wobei der fünfte Link die zweite Datenbreite aufweist,
die dritte Datenbreite größer als die zweite Datenbreite ist.

7. Computersoftwareprodukt, umfassend ausführbaren Softwarecode, der auf einem computerlesbaren Medium gespeichert ist und bei Ausführung mittels eines Computergeräts die Schritte des Verfahrens (100) nach einem der Ansprüche 4 bis 6 ausführt.

## Revendications

1. Appareil (300) comprenant :
un processeur (310),
une logique de génération de paquet (324) conçue pour générer un premier paquet incluant une première partie formant en-tête, une première partie formant commande et une première partie formant charge utile de données,
la première charge utile de données comprenant des premières données,
où la première commande comprend une première taille de salves indépendantes et une première frontière d'enveloppe indépendante,
la première taille de salve représentant la taille de la première charge utile de données,
l'appareil étant **caractérisé en ce que** :
la première taille de salve est dans une unité de mesure représentant une première quantité fixe,
la première frontière d'enveloppe est dans une unité de mesure représentant une seconde quantité fixe,
dans l'expression, quantité fixe signifie une quantité de données ne dépendant ni de la taille des données du processeur (310) ni de la taille des données de chacune des liaisons d'un réseau ; l'appareil se trouvant dans au moins l'une des trois implémentations suivantes :
dans une implémentation en salves d'enveloppe, la première frontière d'enveloppe spécifie une première valeur d'un saut d'adresse entre une frontière de fin et une frontière de début de l'espace d'adressage utilisé pour les données par le processeur (310),
dans une implémentation en salves d'adressage fixe, la première frontière d'enveloppe spécifie une première valeur de la taille d'un cycle d'horloge du processeur (310), c'est-à-dire, au niveau du processeur, de la quantité de données qui peuvent être envoyées par le processeur (310) dans un seul cycle d'horloge,
dans une implémentation en salves incrémentales, la première frontière d'enveloppe spécifie une première valeur de la première frontière d'enveloppe qui n'est possible ni dans une implémentation en salves d'enveloppe ni dans une implémentation en salves d'adressage fixe,
l'appareil (300) comprend une logique de codage (322) conçue pour coder le premier paquet avec une première taille de données, en codant la première partie formant commande,
la première taille de salve indépendante et la première frontière d'enveloppe indépendante sont indépendantes **en ce qu'**il existe des informations qui ne sont pas associées à une taille binaire native de la logique de codage et qui sont statiques à mesure qu'elles traversent le réseau de sorte à ce que des opérations de recodage de commande ne soient pas requises, et
l'appareil (300) comprend en outre une logique d'insertion de paquet conçue pour insérer le premier paquet dans une première liaison du réseau, la première liaison présentant la première taille.

2. Appareil (300) selon la revendication 1,
l'appareil (300) comprenant une logique de conversion ascendante (60),
où l'appareil (300) est conçu pour recevoir en provenance d'une deuxième liaison du réseau un deuxième paquet présentant une deuxième taille de données,
le deuxième paquet incluant une deuxième partie formant en-tête, une deuxième partie formant commande et une deuxième partie formant charge utile de données,
la deuxième liaison présentant la deuxième taille de données,
dans lequel la logique de conversion ascendante (60) est conçue pour convertir le deuxième paquet en un troisième paquet présentant une troisième taille de données,
le troisième paquet incluant la deuxième partie formant en-tête, la deuxième partie formant commande et la deuxième partie formant charge utile de données,
où l'appareil (300) est conçu pour transmettre le troisième paquet à une troisième liaison du réseau,
la troisième liaison présentant la troisième taille de données,
la troisième taille de données étant plus grande que la deuxième taille de données.

3. Appareil (300) selon la revendication 1,
l'appareil comprenant une logique de conversion descendante (50),
où l'appareil (300) est conçu pour recevoir en provenance d'une quatrième liaison du réseau un quatrième paquet présentant la troisième taille de données,
le quatrième paquet incluant une troisième partie formant en-tête, une troisième partie formant commande et une troisième partie formant charge utile de données,
la quatrième liaison présentant la troisième taille de données,
dans lequel la logique de conversion descendante (50) est conçue pour convertir le quatrième paquet en un cinquième paquet présentant une deuxième taille de données,
le cinquième paquet incluant la troisième partie formant en-tête, la troisième partie formant commande et la troisième partie formant charge utile de données,
où l'appareil (300) est conçu pour transmettre le cinquième paquet à une cinquième liaison du réseau,
la cinquième liaison présentant la deuxième taille de données,
la troisième taille de données étant plus grande que la deuxième taille de données.

4. Procédé (100) comprenant :
la génération d'un premier paquet (120) incluant une première partie formant en-tête, une première partie formant commande et première partie formant charge utile de données,
la première charge utile de données comprenant des premières données,
où la première commande comprend une première taille de salves indépendantes et une première frontière d'enveloppe indépendante,
la première taille de salve représentant la taille de la première charge utile de données,
le procédé étant **caractérisé en ce que** :
la première taille de salve est dans une unité de mesure représentant une première quantité fixe,
la première frontière d'enveloppe est dans une unité de mesure représentant une seconde quantité fixe, l'expression quantité fixe signifiant une quantité de données ne dépendant ni de la taille des données du processeur (310) ni de la taille des données de chacune des liaisons d'un réseau,
le procédé se trouvant dans au moins l'une des trois implémentations suivantes :
dans une implémentation en salves d'enveloppe, la première frontière d'enveloppe spécifie une première valeur d'un saut d'adresse entre une frontière de fin et une frontière de début de l'espace d'adressage utilisé pour les données par le processeur (310),
dans une implémentation en salves d'adressage fixe, la première frontière d'enveloppe spécifie une première valeur de la taille d'un cycle d'horloge du processeur (310), c'est-à-dire, au niveau du processeur (310), de la quantité de données qui peuvent être envoyées par le processeur (310) dans un seul cycle d'horloge,
dans une implémentation en salves incrémentales, la première frontière d'enveloppe spécifie une première valeur de la première frontière d'enveloppe qui n'est possible ni dans une implémentation en salves d'enveloppe ni dans une implémentation en salves d'adressage fixe,
et **en ce que** le procédé (100) comprend en outre :
le codage du premier paquet avec une première taille de données, en codant la première partie formant commande en utilisant une logique de codage (322),
où la première taille de salve indépendante et la première frontière d'enveloppe indépendante sont indépendantes **en ce qu'**il existe des informations qui ne sont pas associées à une taille binaire native de la logique de codage et qui sont statiques à mesure qu'elles traversent le réseau de sorte à ce que des opérations de recodage de commande ne soient pas requises, et
l'insertion (130) du premier paquet dans une première liaison du réseau, la première liaison présentant la première taille.

5. Procédé (100) selon la revendication 4, comprenant en outre :
la réception en provenance d'une deuxième liaison du réseau d'un deuxième paquet présentant une deuxième taille de données,
le deuxième paquet incluant une deuxième partie formant en-tête, une deuxième partie formant commande et une deuxième partie formant charge utile de données,
la deuxième liaison présentant la deuxième taille de données,
la conversion du deuxième paquet en un troisième paquet présentant une troisième taille de données,
le troisième paquet incluant la deuxième partie formant en-tête, la deuxième partie formant commande et la deuxième partie formant charge utile de données,
la transmission du troisième paquet à une troisième liaison du réseau,
la troisième liaison présentant la troisième taille de données,
la troisième taille de données étant plus grande que la deuxième taille de données.

6. Procédé (100) selon la revendication 4, comprenant en outre :
la réception en provenance d'une quatrième liaison du réseau d'un quatrième paquet présentant la troisième taille de données,
le quatrième paquet incluant une troisième partie formant en-tête, une troisième partie formant commande et une troisième partie formant charge utile de données,
la quatrième liaison présentant la troisième taille de données,
la conversion du quatrième paquet en un cinquième paquet présentant une deuxième taille de données,
le cinquième paquet incluant la troisième partie formant en-tête, la troisième partie formant commande et la troisième partie formant charge utile de données,
la transmission du cinquième paquet à une cinquième liaison du réseau,
la cinquième liaison présentant la deuxième taille de données,
la troisième taille de données étant plus grande que la deuxième taille de données.

7. Produit de logiciel informatique incluant un code logiciel exécutable stocké sur un support pouvant être lu par ordinateur et, lorsqu'il est exécuté au moyen d'un dispositif informatique, exécutant les étapes du procédé (100) conforme à l'une des revendications 4 à 6.
